Europäisches Patentamt

(19) European Patent Office

Office européen des brevets

(11) Publication number: 0 335 139
A2

## (12) EUROPEAN PATENT APPLICATION

(21) Application number: 89104073.5

(22) Date of filing: 08.03.89

(51) Int. Cl.⁴: G06F 9/44

(30) Priority: 30.03.88 US 175029

(43) Date of publication of application:
04.10.89 Bulletin 89/40

(84) Designated Contracting States:
DE FR GB IT

(71) Applicant: International Business Machines
Corporation
Old Orchard Road
Armonk, N.Y. 10504(US)

(72) Inventor: Redpath, Richard
RFD Ellen Avenue Apt. 3A
Mahopac New York 10541(US)

(74) Representative: Blutke, Klaus, Dipl.-Ing.
IBM Deutschland GmbH Intellectual Property
Dept. Schönaicher Strasse 220
D-7030 Böblingen(DE)

(54) National language support system without external files.

(57) A method for supplying, in a target language, lingual messages used in an application program (102), comprises the steps of (a) representing each lingual message in the application program by a footprint identifier and an allocated space; (b) storing, in a language file (104), lingual messages in the target language in a prescribed sequence; and (c) writing lingual messages from the language file for the target language into the application program including the steps of: (i) where each stored lingual message corresponds to a distinct footprint identifier, searching in the application program for all footprint identifiers one after another in the same sequence as the corresponding lingual messages are stored in the language file; and (ii) reading from the language file the ith lingual message in target language and writing said ith lingual message in the sequence of stored lingual messages in each allocated space in the application program at which an ith searched footprint in the search sequence is found.

FIG. 2

Xerox Copy Centre

## NATIONAL LANGUAGE SUPPORT SYSTEM WITHOUT EXTERNAL FILES

The present invention relates to apparatus and method for producing lingual messages in an application program in a selected target language -- such as French, German, English, or the like.

Where computer application programs are often used worldwide, it is important for messages associated with such application programs to be in the national language of the user. For example, in an application program, there may be prompts, commands, and other lingual messages --such as "DELETE", "TOP OF PAGE", "ERROR, GETTING A CURRENT DRIVE", "PLEASE PRESS A KEY", and the like. These lingual messages are normally dispersed within a stream of machine-readable code and are displayed or printed at appropriate times according to the application program. For a non-English speaking user, it is preferable for such messages to be in the user's national language -- such as French, German, Spanish, or the like.

In the past, the problem of providing lingual messages in an application program in different languages has been addressed in several ways. First, the application program has been written separately for each language with the lingual messages being entered in the appropriate language. Because the program is recoded or rewritten, the possibility of error in translated versions was significant. Whenever the code is to be enhanced, each of the separate versions must be altered, even though the lingual messages might remain unchanged. In addition to the inconvenience of maintaining and updating a different version for each language, the separate version approach has a disadvantage if only the lingual message is to be modified. Because integrally included in the code, a programmer is required to modify the lingual message.

A second approach has involved storing words on a disk or in a read-only memory (ROM) with a corresponding identifier. In the application program, a message identifier would be included for each textual message in the application program. When a message ID is found, a processor looks to find the message ID in the disk or ROM storage. When found, the data string for the message ID is displayed on a screen or output to a printer where the end user would see it. The application program is not altered; an application program operates in conjunction with an external file to display lingual messages in a desired language. In this approach, a CPU jumps back and forth between the application program and the external file (e.g., disk or ROM memory) to perform on-the-fly translation. This method requires that the external file be found and installed for the application program to provide lingual messages in the desired language. Also, a set-up procedure is typically required before the application program can be used, which further inconveniences the end-user.

In U.S. Pat. No. 4595980 to Innes makes reference to language-dependent versions (the first approach discussed above) and discloses another approach which builds on the disk lookup approach. In the Innes patent, an application program XYZ interacts with a user whose national language is English; however the program must also be available to users of other national languages. The application manages a display screen. The application program XYZ operates in conjunction with an Application Control program and a Supervisor. That is, between the application program and a message model collection element which contains the target language messages are the Supervisor and the Application Control program (or Event Handler). Processing control shifts between the various programs as translation is effectuated. The Innes patent involves a detailed approach which permits a system to provide, on a display screen, messages in a desired language. The resulting output does not involve processing the application program to insert lingual messages in the proper language or to provide a self-contained program for use by an end-user without the need for external files, CPU processing between various files, or moving between the application program and disk or ROM memory to find messages. With Innes, programming must be provided to generate messages so that location offsets in memory for the stored messages are exact. Moreover, the creation of the disk file and editing the disk file is not a simple operation.

Accordingly, it is an object of the invention to provide apparatus and method of producing lingual messages in application programs in preferably a selected target national language which is cost-effective in time, resources, and development of future enhancements.

These objects of the invention are accomplished by the features of the main claims. Further advantages of the invention are characterized in the subclaims.

In accordance with the invention, national language support is provided without the need for an external file or other external hardware or software. Real-time language conversion to a desired target national language is achieved in a self-contained package. To the end-user, this feature means that only the application program need be obtained. Lingual messages in the desired target national language are in the application program when received by the end-user. He/she need only install the application program; all lingual messages are automatically in the desired language. In this regard, the present invention provides the end-user with an individual version of the application program in the desired target national language without the need for any human input (i.e., rewriting of the program).

It is further noted that output application program can be generated in either of two ways. (1) A program module which writes the lingual messages into the application program can be part of the application program. A software switch enables the application program to selectively activate the program module. A translation center, after generating a language file, simply installs the application program and switches on the program module. The program module automatically enters lingual messages from the language file into the application program to create the output application program ready for the end-user. (2) The program module may be a separate facility from the application program. The program module, in this case, is separately compiled. As in the former case, the program module writes lingual messages from a language file into the application program to create an output application program ready for the end-user.

No programming skill is required of the individuals at the translation center or of the end-user in obtaining lingual messages in the desired language. The present invention does not require recoding or rewriting of the application program, thereby limiting possible error in the translation process.

The present invention realizes the objects of convenience, user-friendliness, speed of operation, and efficiency in making future enhancements.

To achieve the aforementioned objects, the present invention includes an application program; at least one language file; and a program module. The application program includes machine-readable characters interspersed with "footprints" (each of which identifies a respective lingual message) together with a space allocated for the lingual message.

Each language file stores in prescribed sequence lingual messages that are included in the application program. Lingual messages include textual words; phrases; commands; and data; and groups of words, phrases, commands, or data that are to be printed or displayed or otherwise produced as human-detectable output when the program application is run. In effect, the language files are clones which simply list the same lingual messages in different target languages.

The program module searches the application program for one footprint after another in the same sequence that the lingual messages corresponding thereto are stored in the language file(s). When the ith footprint searched by the program module is found in the application program, the ith entry in the language file is written into the space allocated in the application program adjacent to the ith footprint. Typically, a lingual message occurs only once in an application program. Hence, after all footprints have been searched and found --and lingual messages inserted into appropriate allocated spaces-- the application program includes lingual messages in a desired target national language. The application program, when run, produces lingual messages in the language corresponding to the language file.

The program module may be included in the application program or may be a separate facility. In either case, a separate file is not required and CPU time for exchanging data between files is not required.

The invention will be more fully appreciated with reference to the accompanying figures:

FIG.1 is a block diagram illustrating the elements of the present invention.

FIG.2 is a block diagram illustrating an embodiment of the invention wherein the program module is part of the application program.

FIG.3 is an illustration showing a sample application program, a sample language file, and a sample program module according to the invention.

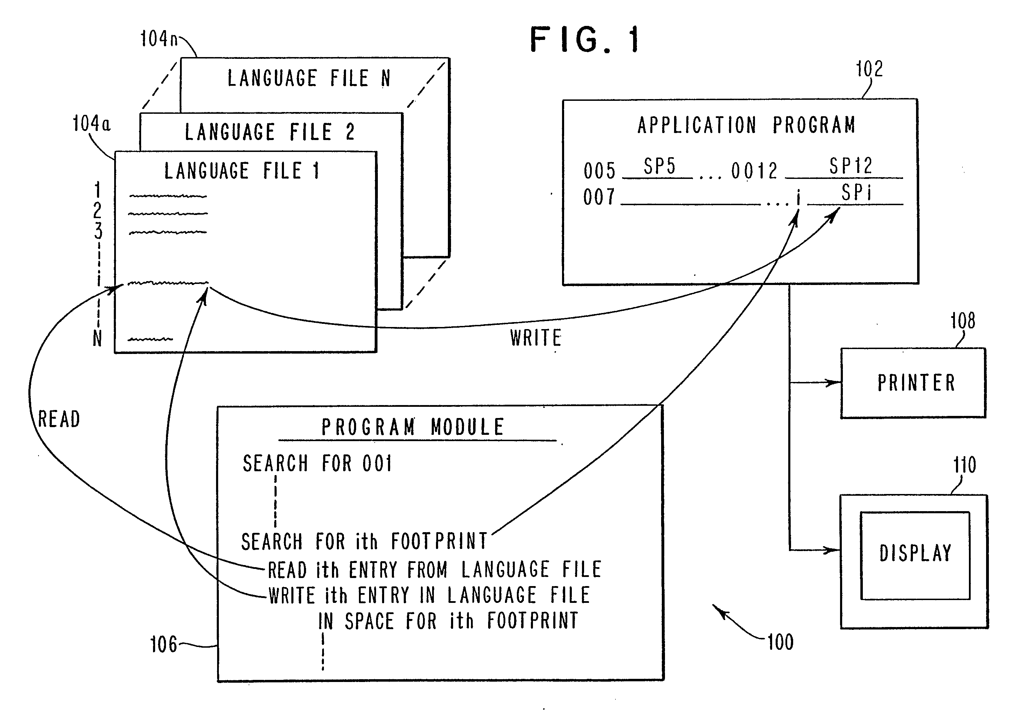

A system 100 which supplies lingual messages in any of several selectable target national languages is shown in flow diagram form in FIG.1.

In FIG.1, an application program 102 is shown to include footprint identifiers --005, 012, 007, i-- each being followed by a respective allocated space SP5, SP12, SP7, SPi. Each footprint --005, 007, 012, and i-- corresponds to a specific message or piece of information to be communicated to a human. Each allocated space has a length sufficient to contain a lingual message whether in any of various target national languages --for example, German, French, Spanish, English. Preferably, each footprint has a respective length allocated which corresponds to the maximum length of the piece of information in any of the target national languages. Alternatively, the space may be 30% longer than the space required for the lingual message in a given target national language (e.g., 30% longer than the space required for the lingual message in English). Or, also alternatively, the allocated spaces may all be the same length --a predetermined length (such as 80 characters in length)-- for all footprints. The footprints and associated allocated spaces are typically dispersed between strings of machine-readable characters. Normally, a footprint occurs only once in the application program. If the same lingual message is to be displayed at several places in the application program, the machine-readable code will normally jump to or refer back to the one location in the application program at which the lingual message is specified.

The placement of human-readable messages in an environment of machine-readable code is well-known in the computer programming art. In the present invention, the application program initially includes the footprint and the allocated space (which may have contents or be blank) rather than just a lingual message.

Also in FIG.1 are a plurality of language files 104a through 104n. Each language file includes a plurality of messages sequenced the same. That is, each language file 104a through 104n stores the same N pieces of information in the same sequence but in a respective target national language.

A program module 106 operates to write the target national language entries from a selected language file 104a through 104n into the allocated space for a corresponding foot print. In particular, the program module 106 includes a SEARCH function which searches the application program 102 for one footprint after another in sequence. Where each footprint corresponds to a respective piece of information, the sequence of searching footprints corresponds to the sequence of pieces of information in the language files 104a through 104n.

For example, letting language file 104a be a German language file, messages in German are stored for each piece of information in sequence: the first piece of information being stored in German at location 1, the second piece of information being stored in German at location 2,..., the ith piece of information being stored in German at the ith location,..., and the Nth piece of information being stored in German at the Nth location. Letting language file 104b represent a Spanish file, the same N pieces of information are stored in Spanish in the same sequence. Item 1 in language file 104a might read "Guten Tag", in language file 104b it might read "Buenos dias", and in language file 106b for English might read "Good morning." The ith lingual message in each language file should be substantially the same. For the possibilities discussed hereinabove for item 1, the space allocated for item 1 must be at least 12 characters in length (to accommodate "Good morning.") Item 1 in each language file corresponds to footprint 001; item 2 in each language file corresponds to footprint 002 item i corresponds to footprint ito footprint N. The program module 106 thus searches for footprints in the same sequence that the corresponding piece of information is listed in the language files 104a through 104n.

When the program module 106 finds a footprint (say, footprint i) the program module 106 reads the ith entry from one of the language files 104a through 104n. A human operator at some point has indicated which language file 104a through 104n is to be used depending on desired target national language. The program module 106 writes the ith entry in the selected language file 104a through 104n into the allocated space accompanying the found ith footprint. The program module 106 searches for each footprint and performs the read-and-write operation for each found footprint. After all footprints have been searched and all read-and-write operations performed, the application program should, in each allocated space, have a lingual message in the desired target national language. The application program may then be sent to an end-user who prefers that target national language.

The user may then run the application program 102 to provide perceptible outputs on a printer 108 or a display 110 which the user can readily recognize.

The present invention contemplates a first embodiment in which a footprint can occur only once in an application program and a second embodiment in which a footprint can occur more than once. In the former case, the program module 106 searches for the next footprint when a currently searched footprint is found. In the latter case, the search for each footprint requires that the entire application program be searched before the next footprint is searched. For each occurrence of the footprint, the appropriate language file entry corresponding to that footprint is written into the allocated space.

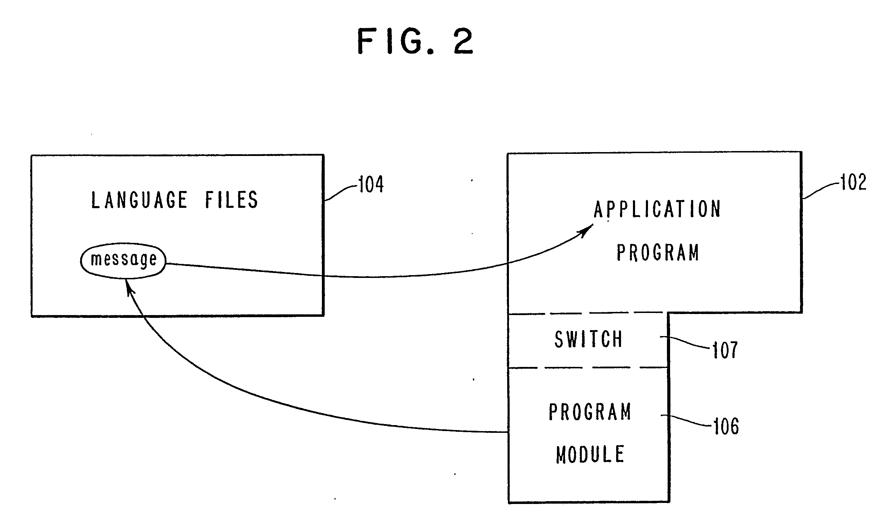

The present invention also contemplates one embodiment in which the program module 106 is part of the application program 102 and another embodiment in which the program module 106 is compiled by itself and used as a separate facility. In the former case (shown in FIG.2), memory space required for the application program 102 is increased to account for the program module 106. The program module 106 is operable by a switch 107 in the application program 102. The latter case of a separate facility program module is used when (1) memory space is limited for the application program or (2) the application program 102 cannot modify itself based on the operating system or other operating constraints.

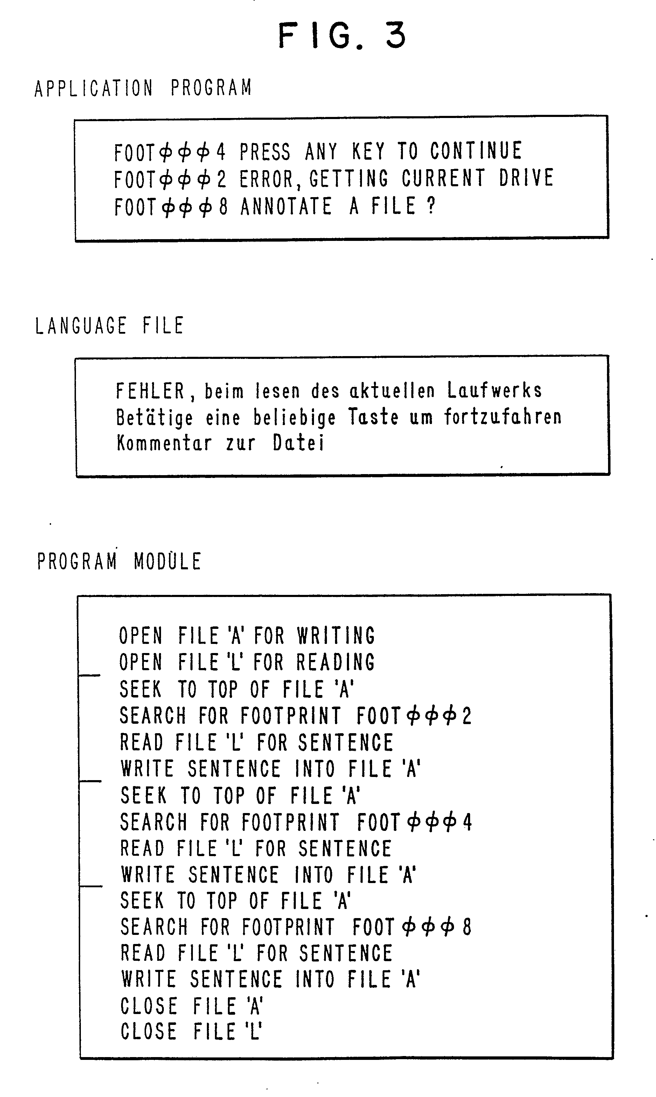

Although the allocated space for each footprint can be blank, it is preferable that each space initially contains a piece of information in one predefined language (for example, English). The application program 102 thus has the footprint followed by a respective lingual message in English. An example is illustrated in FIG.3. The application program, identified as FILE A shows three footprints, each followed by a respective lingual message in English. FOOT0004 corresponds to "Press any key to continue"; FOOT0002 is followed by "Error, getting current drive"; and FOOT0008 is followed by "Annotate a file?".

The language file, identified as File L, is for German and includes three German lingual messages: FEHLER, beim lesen des aktuellen Laufwerks Betätige eine beliebige Taste um fortzufahren Kommentar zur Datei?

The program module 106 opens FILE A for writing and opens FILE L for reading. Starting at the top of the application program FILE A, the search looks for footprint FOOT0002. When FOOT0002 is found in the application program FILE A, FILE L is read for the sentence corresponding thereto. "FEHLER, beim lesen des aktuellen Laufwerks" is read from FILE L and is written over the English message "Error, getting current drive" which initially followed the FOOT0002 in the application program FILE A. The procedure is repeated for FOOT0004 and FOOT0008. After the read-and-write for FOOT0008 --the last footprint in the program module search-- FILE A and FILE L are closed.

In operation, it is contemplated that a language file FILE L is sent to a language translation center. A translator at the center provides a translation for each lingual message. No programming ability is required of the translator. The translator just translates the lingual messages --he/she does not rewrite the program in his/her national language. The language file FILE L includes markers used for reference by the translator to provide needed information (such as beginning of paragraph).

The language files preferably include only those pieces of information used by the application program. Although the language file may be more extensive so that it might be used for several application programs, the inclusion of footprints which do not occur in an application program results in increased processing time.

With the language files defined by respective translators, the program module 106 (of FIG.1) can perform its three functions: SEARCHNLS (buffer, string, length, fd); FILLER (stringlength, lines, program, language); and TRANSLATE (blast, filename). The SEARCH function is used to find the space in the application program into which the lingual message is to be written.

The parameters for SEARCHNLS() are specified as: char * buffer;
char * string;
int len;
FH application;

The above-listed parameter "buffer" represents a memory area that the function is allowed to use as a cache area when reading the application file FILE 'A' to search for a string; "string" represents the footprint searched for; "len" represents the number of characters in the footprint; and "application" represents the file handle to the application program which is to be read from for the footprint search.

The FILLER() function is used to write over each allocated space in the application program with a respective lingual message in the desired target national language. The parameters are specified as:
int stringlength
int lines
FH application
FH language

The above-listed parameter "stringlength" for the FILLER() function represents the allocated space for each lingual message; "lines" represents how many lines/message to read out of the language file FILE 'L'; "application" is the file handle to the application program written to; and "language" is the file handle to the language file to be read from.

The TRANSLATE function is a series of SEARCHNLS() and FILLER() functions to achieve an application program with lingual messages in a desired target national language --which may be either a filling of blank spaces with lingual messages or a translation of lingual messages from one language to another. The parameters of the TRANSLATE() function are two strings. The first string 'blast' is the name of the application program to be "blasted" with the translation process. The 'filename' is the language file to be read to direct the translation process.
TRANSLATE (blast,filename)
char * blast
char * filename

The TRANSLATE() function opens the 'blast' as a binary file and opens 'filename' as a stream. The TRANSLATE() function reads the stream and writes the binary file which becomes a final output application program.

The final output application program is ready for use by the end user. Because the final output application program has the translated lingual messages already included therein, the end user does not need to access a CPU or generate translated messages by means of a central message server as in the Innes patent.

The present invention is portable on the DOS and UNIX * operating systems with no changes. Although the programming for the present invention

*UNIX is a trademark of AT&T

has been implemented in the "C" language, the invention does not rely on the features of any particular language or hardware environment. The invention may be implemented as well in BASIC or PASCAL.

One further point worth noting. Although the invention is directed to national language specification, the invention is similarly and readily applicable to colloquial or jargon specified language within a single national language. For example, user-oriented synonyms or abbreviations as suggested in the innes patent may be produced by the present invention as well. That is, one language file might be adapted to standard English, another to Air Force jargon, and another to slang. The first language file might include the entry "Good bye" which in the second file might be "Out" and in the third file might be "See you later." For purposes of the present specification, special languages and jargons are treated substantially the same as non-English national languages and are processed in the same way.

While the invention has been described with reference to preferred embodiments thereof, it will be understood by those skilled in the art that various changes in form and details may be made without departing from the scope of the invention.

## Claims

1. Apparatus for supplying, in a selected target national language, lingual messages used in an application program, comprising:
means for representing each lingual message in the application program by a footprint identifier and an allocated space;
language file means (104) for storing lingual messages in the target national language in a prescribed sequence; and
program module means (102) for writing lingual messages from the language file means into the application program (102) including:
where each stored lingual message corresponds to a distinct footprint identifier, means for searching in the application program for all footprint identifiers one after another in. the same sequence as the corresponding lingual messages are stored in the language file means; and
means for reading from the language file means the ith lingual message in the sequence of lingual messages in the language file means and writing said ith lingual message in the target national language in each allocated space in the application program at which the ith searched footprint in the search sequence is found.

2. Apparatus as in claim 1 wherein said application program (102) includes said program module (106) and switch means (107) for activating the program module (106).

3. Apparatus as in claim 1 wherein said program module (106) comprises a facility separate from and coupled to said application program (102).

4. Apparatus as in claim 1 wherein, in response to said program module (106) writing lingual messages in the selected target national language into each allocated space in the application program (102), said application program comprises an output application program in which all lingual messages are in the selected target national language.

5. Apparatus as in claim 4 further comprising: an external device (108, 110) coupled to receive said output application program as input.

6. Apparatus as in claim 5 wherein said external device comprises display means (110) for displaying each lingual message in the selected target national language.

7. Apparatus as in claim 5 wherein said external device comprises printer means (108) for printing each lingual message in the selected target national language.

8. A method for supplying, in a target language, lingual messages used in an application program, comprising the steps of:
(a) representing each lingual message in the application program by a footprint identifier and an allocated space;
(b) storing, in a language file, lingual messages in the target language in a prescribed sequence; and
(c) writing lingual messages from the language file for the target language into the application program including the steps of:
(d) where each stored lingual message corresponds to a distinct footprint identifier, searching in the application program for all footprint identifiers one after another in the same sequence as the corresponding lingual messages are stored in the language file; and
(e) reading from the language file the ith lingual message in target language and writing said ith lingual message in target language in each allocated space in the application program at which an ith searched footprint in the searched sequence is found.

9. The method of claim 8 comprising the further step of:
(f) repeating steps (c) through (d) for each ith footprint searched for in the application program, wherein the application program with all allocated spaces having target language lingual messages written therein comprises an output application program.

10. The method of claim 9 comprising the further step of:
selecting one of a plurality of language files, each language file corresponding to a respective target language;
the resulting output application program having lingual messages in the target language corresponding to the selected language file.

11. An output application program with lingual messages in a selected target language made according to the steps of claim 8.

# FIG. 1

**APPLICATION PROGRAM** 102

```
005   SP5  ...0012     SP12
007              ...i     SPi
```

PRINTER 108

DISPLAY 110

100

WRITE

LANGUAGE FILE N 104n

LANGUAGE FILE 2

LANGUAGE FILE 1 104a

```
          1
          2
          3 ----
          N
```

**PROGRAM MODULE** 106

SEARCH FOR 001

SEARCH FOR ith FOOTPRINT
READ ith ENTRY FROM LANGUAGE FILE
WRITE ith ENTRY IN LANGUAGE FILE
          IN SPACE FOR ith FOOTPRINT

READ

IBM —YO 988 014

# FIG. 2

LANGUAGE FILES ─104

(message)

APPLICATION

PROGRAM ─102

SWITCH ─107

PROGRAM

MODULE ─106

EP 0 335 139 A2

# FIG. 3

APPLICATION PROGRAM

FOOTϕϕϕ4 PRESS ANY KEY TO CONTINUE
FOOTϕϕϕ2 ERROR, GETTING CURRENT DRIVE
FOOTϕϕϕ8 ANNOTATE A FILE ?

LANGUAGE FILE

FEHLER, beim lesen des aktuellen Laufwerks
Betätige eine beliebige Taste um fortzufahren
Kommentar zur Datei

PROGRAM MODULE

OPEN FILE 'A' FOR WRITING
OPEN FILE 'L' FOR READING
SEEK TO TOP OF FILE 'A'
SEARCH FOR FOOTPRINT FOOTϕϕϕ2
READ FILE 'L' FOR SENTENCE
WRITE SENTENCE INTO FILE 'A'
SEEK TO TOP OF FILE 'A'
SEARCH FOR FOOTPRINT FOOTϕϕϕ4
READ FILE 'L' FOR SENTENCE
WRITE SENTENCE INTO FILE 'A'
SEEK TO TOP OF FILE 'A'
SEARCH FOR FOOTPRINT FOOTϕϕϕ8
READ FILE 'L' FOR SENTENCE
WRITE SENTENCE INTO FILE 'A'
CLOSE FILE 'A'
CLOSE FILE 'L'

IBM — YO 988 014